# EUROPEAN PATENT SPECIFICATION

(11) **EP 3 564 769 B1**
(45) Date of publication and mention of the grant of the patent: **02.06.2021**
(21) Application number: 17886568.9
(22) Date of filing: 07.04.2017
(51) Int. Cl.: G05D 1/02, G06K 9/00

(54) **ROUTE PLANNING METHOD FOR INTELLIGENT ROBOT**
VERFAHREN ZUR ROUTENPLANUNG FÜR INTELLIGENTEN ROBOTER
PROCÉDÉ DE PLANIFICATION D'ITINÉRAIRE D'UN ROBOT INTELLIGENT

(30) Priority: 29.12.2016 CN 201611244989
(43) Date of publication of application: 06.11.2019
(73) Proprietor: Amicro Semiconductor Co., Ltd., Zhuhai, Guangdong 519000 (CN)
(72) Inventor: XIAO, Gangjun, Zhuhai, Guangdong 519000 (CN); LI, Ming, Zhuhai, Guangdong 519000 (CN); LI, Gentang, Zhuhai, Guangdong 519000 (CN)
(74) Representative: Novagraaf Technologies
(86) International application number: PCT/CN2017/079783
(87) International publication number: WO 2018/120489

(56) References cited:
- EP-A1- 0 142 594
- WO-A1-2011/057153
- WO-A1-2014/003517
- CN-A- 102 138 769
- CN-A- 104 972 462
- CN-A- 104 977 926
- CN-A- 106 020 207
- US-A- 5 402 051
- US-A1- 2007 293 985

## Description

### CROSS REFERENCE TO RELATED APPLLICATIONS

This application is the national phase entry of International Application No. PCT/CN2017/079783, filed on April 07, 2017, which is based upon and claims priority to Chinese Patent Application No. 201611244989.6, filed on December 29, 2016.

### TECHNICAL FIELD

This present invention herein belongs to the field of intelligent control, especially relates to a path planning method of an intelligent robot.

### BACKGROUND

As a key factor in the transformation process of world economy and industry growth mode, intelligent robot is entering a new stage of development. Intelligent robots are manufacturing equipment, equipment tools and service consumables having abilities of perception, decision-making and execution. An intelligent machine used as manufacturing equipment in production process and environment is called an industrial robot. The intelligent machine used as consumable for individual or household service is called a household service robot. And the intelligent machine used as equipment tools for the service and maintenance under special environment is called a special service robot.

Taking a household sweeping robot as an example, the household sweeping robot is also called automatic cleaning machine, intelligent cleaner, robotic vacuum cleaner, etc. The household sweeping robot is a kind of intelligent household appliance, and the household sweeping robot is able to clean the floor automatically with certain degree of artificial intelligence.

The weeping robot may cover the entire room according to a certain path planning, so as to achieve a goal of traversal. The path planning is divided into random traversal and planning traversal.

The random traversal refers that a robot tries to cover a work zone according to a certain moving algorithm, such as triangular and pentagonal tracks. When the robot encounters an obstacle, the robot will execute a corresponding steering function. The random traversal is a low-cost strategy exchanging time into space, and if a time period is not counted in, the robot may reach a coverage rate of 100%. The random traversal may not position, use an environmental map, and make path planning. At present, most of the sweeping robots of iRobot adopt this random traversal.

The planning traversal refers that, in a process of walking, a robot will make an environmental map, and then analyze the environmental map in real time to complete new path planning, so as to clean the entire room. This planning traversal is very efficient, and to the robot may finish cleaning with the fastest speed while ensuring coverage at the same time.

However, the planning traversal needs to solve three problems.

For a first problem, the environmental map is built to locate a position of the robot.

For a second problem, the robot is navigated from a start position to a target position, and the robot may avoid at least one obstacle automatically in a process of navigation.

For a third problem, the robot needs to acquire a method for traversing the entire room. US 20070293985A1, WO 2014003517A1 and WO 2011057153A1 provide related technical solutions; however, the above mentioned problem still remains unsolved.

### SUMMARY

At least some embodiments of the present invention provide a low-cost path planning method of a robot, which may make an effective raster map with error controllable relying on distance information, angle information, collision information and obstacle information of robot's behaviors, so as to realize path planning. At least one purpose of present invention may be realized with technical solutions as follows.

In an embodiment of the present invention, a path planning method of an intelligent robot is provided. The intelligent robot includes a main control component, at least one moving wheel, a collision detection sensor, an obstacle detection sensor, a distance information sensor and an angle information sensor, including:
dividing an operating space into a plurality of rectangular virtual regions, and an area of each rectangular virtual region of the plurality of rectangular virtual regions is n*m square meters;
controlling the intelligent robot to traverse the each rectangular virtual region with a bow-shaped behaviour;
when traversing with the bow-shaped behaviour, building, by the intelligent robot, a raster map with distance information acquired by the distance information sensor, angle information acquired by the angle information sensor, collision information acquired by the collision detection sensor and obstacle information acquired by the obstacle detection sensor, and marking, by the intelligent robot, pass points, obstacle points and collision points;
analyzing the raster map in real time to determine whether the entire operating space has been fully traversed, and when the entire operating space has been fully traversed, entering into the next step and when the entire operating space has not been fully traversed, returning to the step of controlling the intelligent robot to traverse the each rectangular virtual region with the bow-shaped behaviour;
controlling the intelligent robot to make an alongst behaviour, and marking alongst behaviour points on the raster map.

In an optional embodiment, the bow-shaped behaviour includes the following steps:
step one, going straight until finding an obstacle, or going straight until reaching a boundary of any virtual region;
step two, after finding the obstacle or reaching the boundary of any virtual region, turning 90°;
step three, going straight for a preset distance L or going straight until finding the obstacle;
step four, turning 90° and returning to the step one.

In an optional embodiment, the preset distance L in the step three of the bow-shaped behaviour is half of a width of the intelligent robot.

According to the invention, each raster in the raster map is expressed with a digital sequence, the digital sequence including: at least one digital segment configured to express a virtual region where this raster is located, at least one digital segment configured to express whether the intelligent robot has ever reached this raster, at least one digital segment configured to express whether at least one obstacle is existed on this raster, at least one digital segment configured to express whether the intelligent robot has a collision on this raster, and at least one digital segment configured to express the intelligent robot has passed through this raster when making the alongst behaviour.

In an optional embodiment, an expression form of the raster map is to use different colours to express rasters, pass points, obstacle points, collision points and alongst behaviour points which are not marked by the intelligent robot respectively.

In an optional embodiment, a boundary of a first virtual region of the plurality of rectangular virtual regions is determined by a process of vertical boundary determination and a process of horizontal boundary determination,
in the process of the vertical boundary determination, when the intelligent robot starts, determining a forward moving direction as one boundary, and after turning right at the first time, determining a parallel line in n meter at right as another boundary, so that at least one vertical boundary is completed when the intelligent robot starts to move;
in the process of horizontal boundary determination, when moving along a vertical direction, constantly calculating the biggest coordinate point and the smallest coordinate point of the raster map where the intelligent robot passed through, and when a difference between the biggest coordinate point and the smallest coordinate point reaches m meter, determining a line which passes through the biggest coordinate point and is perpendicular to the vertical boundary as one horizontal boundary, and determining a line which passes through the smallest coordinate point and is perpendicular to the vertical boundary as another horizontal boundary.

In an optional embodiment, a method for analyzing and determining a new virtual region in the plurality of rectangular virtual regions includes: when the intelligent robot finishes traversing a first virtual region, analyzing coordinate points on four virtual boundaries of the first virtual region;
when the intelligent robot passes through at least two continuous coordinate points is existed on a certain virtual boundary without any collision or obstacles nearby, determining that the new virtual region exists beside the certain virtual boundary, saving the new virtual region into a new virtual region array of the plurality of rectangular virtual regions, and then selecting a virtual region which is closest to the intelligent robot from the new virtual region array for controlling the intelligent robot to enter into the selected virtual region;
determining boundaries of the selected virtual region according to a method for determining boundaries of the first virtual region, and after traversing the selected virtual region, deleting new region information corresponding to the selected virtual region from the new virtual region array; and
when there is no new virtual region in the new virtual region array, ending the bow-shaped behaviour, and determining that the entire operating space has been fully traversed.

In an optional embodiment, when the intelligent robot traverses a virtual region with the bow-shaped behaviour, conditions to exit the bow-shaped behaviour include:
condition one: in the step three of going straight in the bow-shaped behaviour, when the obstacles are found for two consecutive times, then shortening a distance of going straight in the step one; and in the step one of going straight in the bow-shaped behaviour, when a moving length is shorter than half of the width of the intelligent robot for two consecutive times, exiting the bow-shaped behaviour;
condition two: in a process of the bow-shaped behaviour, constantly analyzing whether obstacles always existed in a direction of going straight in the step one of the bow-shaped behaviour; when determining that the obstacles always existed in the direction of going straight in the step one of the bow-shaped behaviour, exiting the bow-shaped behaviour.

In an optional embodiment, the method further includes: when the bow-shaped behaviour ends, analyzing the raster map to find an omitted local region which is closest to the intelligent robot; navigating the intelligent robot to the omitted local region, and restart the bow-shaped behaviour until finish traversing the omitted local region.

In an optional embodiment, a method for determining whether there is any omitted local region includes:
determining whether two consecutive boundary points exist along a direction of going straight in the step three of the bow-shaped behaviour or along a reverse direction of 180°;
when determining that two consecutive boundary points exist along the direction of going straight in the step three of the bow-shaped behaviour or along the reverse direction of 180°, determining that the omitted local region exists;
and each boundary point of the two consecutive boundary points is a point on the boundary of the raster map, and the intelligent robot passes through the two consecutive boundary points without the collision or the obstacles nearby.

In an optional embodiment, the method further includes: finding a omitted local region which is closest to the intelligent robot from all the omitted local regions, and keep starting the bow-shaped behaviour.

In an optional embodiment, a method for determining each boundary point of the two consecutive boundary points includes:
step a, determining whether the intelligent robot passes through a current point without the collision or detecting the obstacles nearby: when determining that the intelligent robot passes through the current boundary point without the collision or detecting the obstacles nearby, entering into step b, otherwise, ending the method;
step b, determining whether the intelligent robot has not passed through a previous point without the collision or detecting the obstacles nearby; when determining whether the intelligent robot has not passed through the previous point without the collision or detecting the obstacles nearby, entering into step c; otherwise, ending the method;
step c, determining that the current point as each boundary point;
and the previous point refers to a coordinate point next to the current point along the direction of going straight in the step three of the bow-shaped behaviour or along the reverse direction of 180°.

In an optional embodiment, in a process of traversing the entire operating space, a method for determining the omitted local region includes:
step A, traversing the entire raster map array to determine whether the current point is the last point, when determining that the current point is the last point, ending the method; otherwise, enter into step B;
step B, determining whether the current point is a virtual boundary point, when determining that the current point is the virtual boundary point, entering into step A, otherwise, entering into step C;
step C, determining whether the current point is a boundary point, when determining that the current point is the boundary point, entering into step D, otherwise, entering into step A;
step D, determining whether there is at least one point adjacent to this boundary point, when determining that there is the at least one point adjacent to this boundary point, entering into step E, otherwise, entering into step A;
step E saving this boundary point into a omitted local region array.

In an optional embodiment, the alongst behaviour includes: calculating a total length of boundaries of traversed virtual regions according to the raster map; dividing the total length by a moving speed when the intelligent robot making the alongst behaviour to obtain a time period for making the alongst behaviour; starting and keeping the alongst behaviour until the time period is over, and ending the alongst behaviour.

This present invention adopts a bow-shaped path to traverse a room in virtual regions. As long as in the process of bow-shaped behavior, try to avoid collision and control the speed to be not too fast and keep stable when turning for 90°, and it will cause smaller errors to wheel coder and gyroscope in this way, so as to ensure the map recorded in the process of bow-shaped behavior to be effective. With this method of traversing room in bow-shaped behavior, it can provide a possibility that makes a map with controllable error with no need for calibration.

### BRIEF DESCRIPTION OF THE DRAWINGS

Fig. 1 is a structural schematic diagram of an intelligent robot according to an embodiment of the present invention.
Fig. 2 is a schematic diagram of an intelligent robot's bow-shaped behavior in a path planning method according to an embodiment of the present invention.
Fig. 3 is a schematic diagram of determining boundaries of virtual regions in a path planning method according to an embodiment of the present invention.
Fig. 4, Fig. 5 and Fig. 6 are schematic diagrams of different situations when an intelligent robot moves in virtual regions with bow-shaped behaviors and encounters actual boundaries in a path planning method according to optional embodiments of the present invention.
Fig. 7 is a flowchart of determining boundary points in a path planning method according to an embodiment of the present invention.
Fig. 8 is a flowchart of determining omitted local regions having not been traversed in a path planning method according to an embodiment of the present invention.

### DETAILED DESCRIPTION

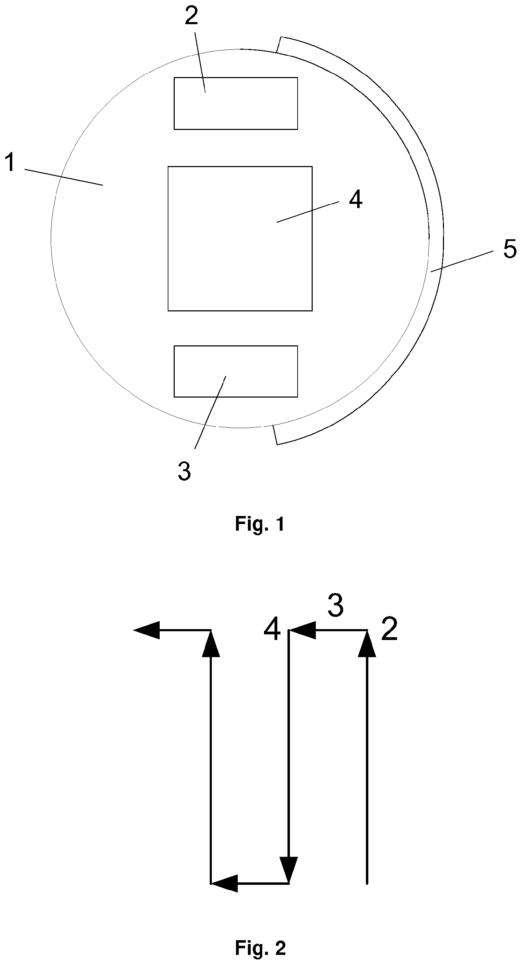

Integrating attached drawings, specific execution mode of present invention are further illustrated below:
As shown in Fig. 1, a path planning method of an intelligent robot is according to an optional embodiment. The intelligent robot includes a moving body 1, a main control component 4, a sensor set 5, a power component and a regional operating component. Herein, the moving body 1 includes a casing, a moving wheel 2 and a moving wheel 3. The sensor set 5 includes a collision detection sensor, a fall-arrest detection sensor, an obstacle detection sensor, a distance information sensor and an angle information sensor. Each sensor of the sensor set is electricity connected with the main control component.

Specifically, the collision detection sensor is arranged to determine whether the intelligent robot collides with an obstacle when the intelligent robot encounters the obstacle, and notify the main control component 4 of a determination result. The fall-arrest detection sensor is arranged to determine whether the intelligent robot is in a danger state when the intelligent robot is hung in the air, and notify the main control component 4 of a determination result. The obstacle detection sensor is arranged to determine whether any obstacle appears around the intelligent robot, and notify the main control component 4 of a determination result. A detection distance of the obstacle detection sensor is 10cm, and the obstacle detection sensor is composed of five infrared distance measurement sensors including a front infrared distance measurement sensor, a left front infrared distance measurement sensor, a right front infrared distance measurement sensor, a left infrared distance measurement sensor and a right infrared distance measurement sensor. The distance information sensor is a wheel coder. And the angle information sensor is a gyroscope. The regional operating component refers to at least one component having certain functions over a region where the intelligent robot is located. And the at least one component includes at least one of the followings:
a cleaning component, a camera component, a humidifying component, a dehumidifying component and a deinsectization component. In this embodiment, the cleaning component is taken as an example, that is, the intelligent robot stated in this embodiment is a cleaning robot.

In the path planning method of the intelligent robot according to an embodiment, the intelligent robot adopts bow-shaped path. As shown in Fig. 2, the intelligent robot may repeat the following steps, so as to realize the bow-shaped path.

At step one, the intelligent robot is controlled to go straight until finding an obstacle or reaching a boundary of virtual region.

At step two, after finding an obstacle, the intelligent robot is controlled to turn 90°.

At step three, the intelligent robot is controlled to go straight for 150mm (about half of a diameter or width of the intelligent robot) or until finding an obstacle.

At step four, the intelligent robot is controlled to turn 90°.

An advantage of the bow-shaped path lies in that the intelligent robot may be controlled to execute one of the following operations: go straight and turns 90°. We know that, an error of the wheel coder is mainly caused by wheel slips; and an error of the gyroscope is mainly caused by exceeding a measurement range of angular velocity when the intelligent robot turns too fast or shakes. In the process of the bow-shaped path, the infrared distance measurement sensor may be adopted to avoid collision, and at least one black-white universal wheel may be adopted to detect whether the intelligent robot slips. When a slip happens, an advance distance provided by the wheel coder is ignored when the intelligent robot slips. At the same time, when the intelligent robot is controlled to turn 90°, a speed is controlled to be not too fast and keep stable, so that the errors caused by the wheel coder and the errors caused by the gyroscope will become small in this way, so as to ensure a map recorded in the process of the bow-shaped path to be effective.

In the path planning method of the intelligent robot according to an optional embodiment, a raster map is adopted. Distance information acquired by distance information sensor, angle information acquired by angle information sensor, collision information acquired by collision detection sensor and obstacle information acquired by obstacle detection sensor are used for building the raster map, and pass points, obstacle points and collision points are made by the intelligent robot. The intelligent robot updates the raster map when moving, and the intelligent robot will update any state of places which the robot has passed through onto the raster map.

After building the raster map, the raster map may be saved in the main control component 4. An expression form of the raster map includes as follows. Each black raster indicates that the intelligent robot may not mark this raster. Each green raster indicates points where the intelligent robot may pass through normally. Each red raster indicates points where obstacles are located. Each blue raster indicates points where the intelligent robot collides with obstacles. And each white raster indicates points where the alongst behavior is made.

Herein, each raster may be expressed with an 8-bit number. The higher four bits are used for recording regional information, indicating a region where this raster is located, and thus the higher four bits may support 16 regions. The lower four are used for indicating actual information on the raster map. A 0-bit indicates whether the intelligent robot has reached this raster, a value "0" indicates that the intelligent robot has not reached this raster and a value "1" indicates that the intelligent robot has reached this raster. A 1-bit indicates whether any obstacle is existed in this raster, a value "0" indicates that none obstacle is existed in this raster and a value "1" indicates that at least one obstacle is existed in this raster. A 2-bit indicates whether any collision happens in this raster, a value "0" indicates that none collision happens in this raster and a value "1" indicates that at least one collision happens in this raster. A 3-bit indicates the intelligent robot has passed through this raster when making the alongst behavior.

In the path planning method of intelligent robot according to an optional embodiment, the operating space is divided into multiple rectangular virtual regions, and an area of each rectangular virtual region of the plurality of rectangular virtual regions is n*m square meters, such as 4*4 square meters. After traversing a current virtual region, the intelligent robot will traverse a next virtual region.

A boundary of a first virtual region of multiple rectangular virtual regions is determined as follows.

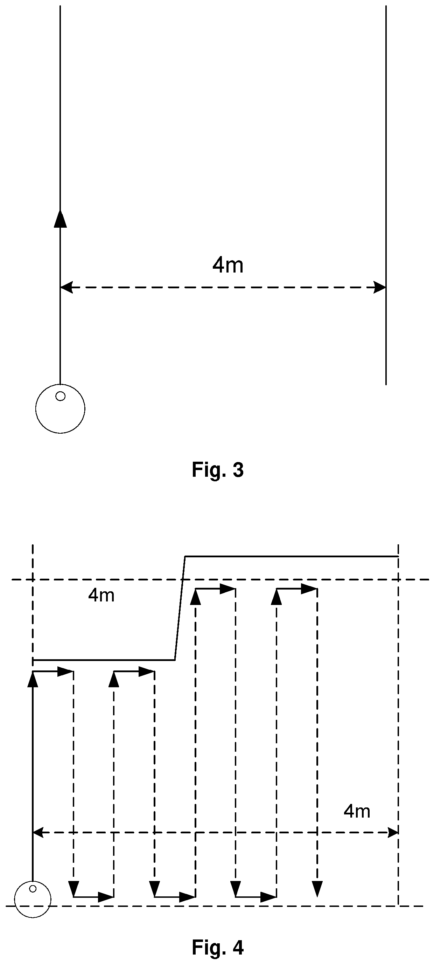

As shown in Fig. 3, each vertical boundary may be determined as follows. When the intelligent robot starts to work, taking a forward direction as a boundary, the intelligent robot is controlled to turn right at the first time, and a line parallel with this boundary in 4 meters at right is determined as another boundary. The vertical boundaries have already been set when the intelligent robot starts to work.

Each horizontal boundary may be determined as follows. When the intelligent robot is controlled to moving in a vertical direction, the intelligent robot will constantly calculate the biggest coordinate point and the smallest coordinate point of the raster map where the intelligent robot passed through, and when a difference between the biggest coordinate point and the smallest coordinate point reaches 4 meters, a line which passes through the biggest coordinate point and is perpendicular to the vertical boundary is determined as one horizontal boundary, and a line which passes through the smallest coordinate point and is perpendicular to the vertical boundary is determined as another horizontal boundary.

As shown in Fig. 4, a rectangular region marked with a dotted line is a virtual region, and a solid line is an actual boundary of an operating space.

A new virtual region in the multiple rectangular virtual regions is analyzed and determined as follows.

When the intelligent robot finishes traversing the first virtual region, the intelligent robot may analyze coordinate points on four virtual boundaries of the first virtual region.

When the intelligent robot passes through at least two continuous coordinate points (with an interval bigger than 0.3m) is existed on a certain virtual boundary without any collision or obstacles nearby, it is determined that the new virtual region exists beside the certain virtual boundary, the new virtual region is saved into a new virtual region array of the multiple rectangular virtual regions, and then a virtual region which is closest to the intelligent robot is selected from the new virtual region array for controlling the intelligent robot to enter into the selected virtual region. After traversing the selected virtual region, new region information corresponding to the selected virtual region is deleted from the new virtual region array. Continue this method, and when there is no new virtual region in the new virtual region array, the bow-shaped behaviour is ended, and it is determined that the entire operating space has been fully traversed.

Specifically, when the intelligent robot traverses a virtual region with bow-shaped behavior, there are two conditions to exit the bow-shaped behavior.

At condition one, in the step three of going straight, when the obstacles are found for two consecutive times, then a distance of the step one of going straight is shortened; in the step one of going straight, when a moving length is shorter than 150mm (about half of the radius or width of intelligent robot) for two consecutive times, then exit bow-shaped behavior.

At condition two, in a process of bow-shaped behavior, whether obstacles always existed in a direction of going straight in the step one of the bow-shaped behaviour is constantly analyzed. When it is determined that the obstacles always existed in the direction of going straight in the step one of the bow-shaped behaviour, the bow-shaped behaviour is exited.

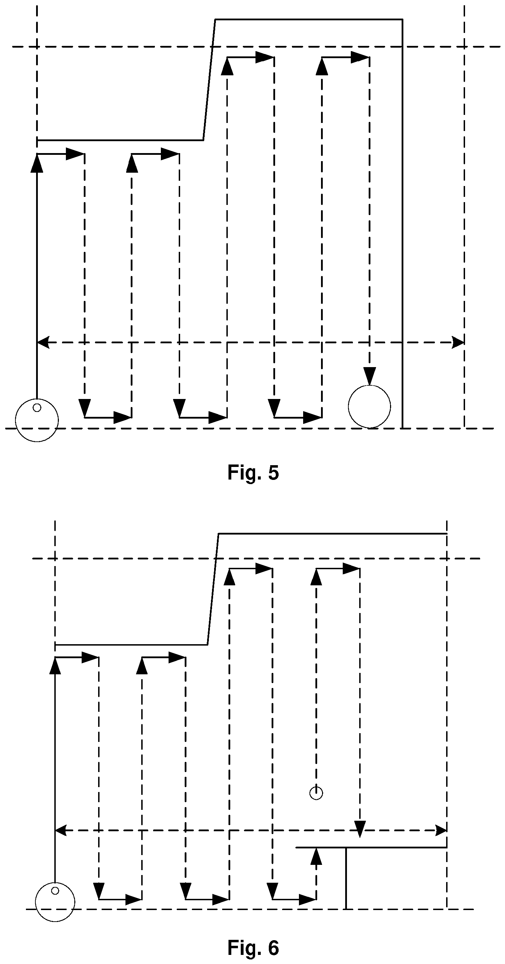

As shown in Fig. 5, a rectangular region marked with a dotted line is a virtual region, and a solid line is an actual boundary of an operating space. When the intelligent robot moves to a boundary of a wall, i.e. a point at bottom right shown in this figure and the intelligent robot detects the step three of going straight in the bow-shaped behavior is full of obstacles, it is determined that the bow-shaped behavior ends.

When the bow-shaped behavior ends, the intelligent robot may analyze the raster map to find an omitted region which is closest to the intelligent robot at present, and then the intelligent robot is navigated to the omitted region and the bow-shaped behavior restarts. As shown in Fig. 6, the rectangular region marked with the dotted line is the virtual region, and the solid line is the actual boundary of the operating space. When the intelligent robot traverses the virtual region, and the intelligent robot is trapped in a small region at the corner, the bow-shaped behavior is cancelled at this time. When the intelligent robot finds a local region having not been traversed and next to the small region, the intelligent robot is navigated to this region and keep traversing with the last bow-shaped behavior until this local region is fully traversed.

A method for analyzing and determining whether there is any omitted local region is as follows.

It analyzed and determined whether there are two continuous boundary points (0.3m, diameter or width of the intelligent robot) along a forward direction (namely going straight of step three) or along the reverse direction of 180° of the bow-shaped behavior. If so, the omitted local region may be determined.

An omitted local region which is closest to the intelligent robot is found from all the omitted local regions, and then the intelligent robot is navigated to this omitted local region, and the bow-shaped behavior starts and the intelligent robot may keep traversing. When none omitted local region is found from all the omitted local regions, the intelligent robot may finish traversing.

Each boundary point refers to a point, which the intelligent robot passes through normally without collision or obstacles, on the boundary of the raster map.

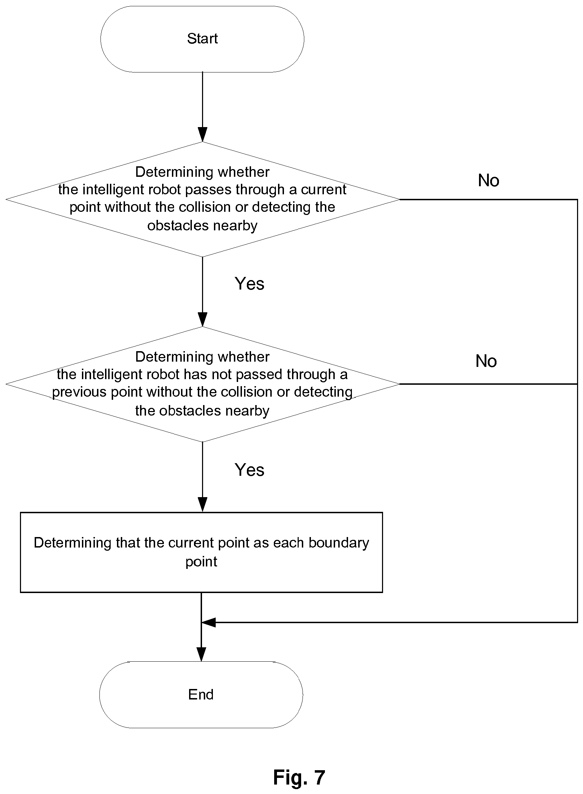

As shown in Fig. 7, the method for determining each boundary point of the two consecutive boundary points includes the following steps:
step a, determining whether the intelligent robot passes through a current point without the collision or detecting the obstacles nearby: when determining that the intelligent robot passes through the current boundary point without the collision or detecting the obstacles nearby, entering into step b, otherwise, ending the method;
step b, determining whether the intelligent robot has not passed through a previous point without the collision or detecting the obstacles nearby; when determining whether the intelligent robot has not passed through the previous point without the collision or detecting the obstacles nearby, entering into step c; otherwise, ending the method;
step c, determining that the current point as each boundary point;
and the previous point refers to a coordinate point next to the current point along the direction of going straight in the step three of the bow-shaped behaviour or along the reverse direction of 180°.

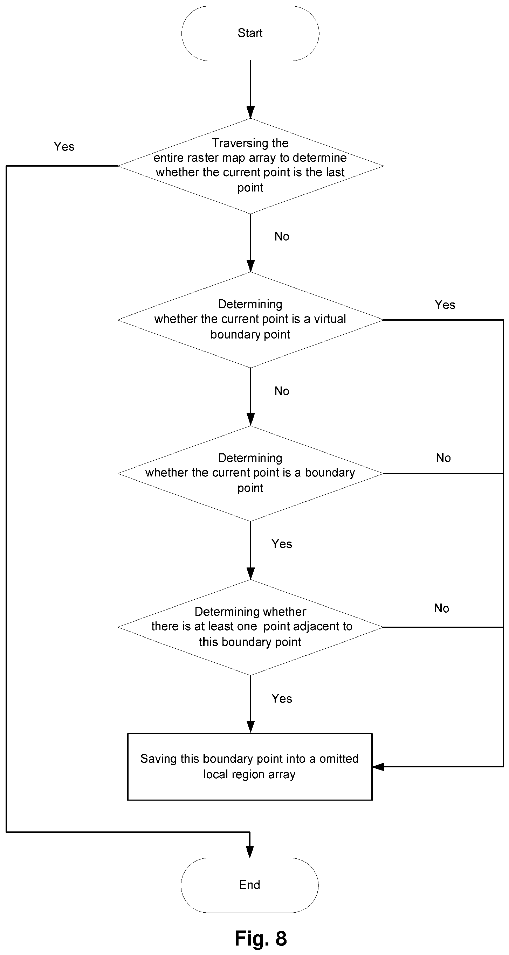

As shown in Fig. 8, in a process of traversing the entire operating space, a method for determining the omitted local regions includes the following steps:
step A, traversing the entire raster map array to determine whether the current point is the last point, when determining that the current point is the last point, ending the method; otherwise, enter into step B;
step B, determining whether the current point is a virtual boundary point, when determining that the current point is the virtual boundary point, entering into step A, otherwise, entering into step C;
step C, determining whether the current point is a boundary point, when determining that the current point is the boundary point, entering into step D, otherwise, entering into step A;
step D, determining whether there is at least one point adjacent to this boundary point, when determining that there is the at least one point adjacent to this boundary point, entering into step E, otherwise, entering into step A;
step E saving this boundary point into an omitted local region array.

Then, an omitted local region point which is closest to a current coordinate is selected from an omitted local region array and determined as a target point. The intelligent robot is navigated to this point, the intelligent robot may restart bow-shaped behavior and keep traversing.

After traversing all virtual regions, a total length of boundaries of traversed virtual regions is calculated according to the raster map, the total length is divided by a moving speed when the intelligent robot making the alongst behaviour to obtain a time period for making the alongst behaviour, and the intelligent robot may start and keep the alongst behaviour until the time period is over, and the intelligent robot may end the alongst behaviour.

## Claims

1. A path planning method of an intelligent robot, wherein the intelligent robot contains comprises a main control component (4), at least one moving wheel (2, 3), a collision detection sensor, an obstacle detection sensor, a distance information sensor and an angle information sensor, and the path planning method comprising:
dividing an operating space into a plurality of rectangular virtual regions, wherein an area of each rectangular virtual region of the plurality of rectangular virtual regions is n*m square meters;
controlling the intelligent robot to traverse the each rectangular virtual region with a bow-shaped behaviour;
when traversing with the bow-shaped behaviour, building, by the intelligent robot, a raster map with distance information acquired by the distance information sensor, angle information acquired by the angle information sensor, collision information acquired by the collision detection sensor and obstacle information acquired by the obstacle detection sensor, and marking, by the intelligent robot, pass points, obstacle points and collision points;
analyzing the raster map in real time to determine whether the entire operating space has been fully traversed, and when the entire operating space has been fully traversed, entering into the next step and when the entire operating space has not been fully traversed, returning to the step of controlling the intelligent robot to traverse the each rectangular virtual region with the bow-shaped behaviour;
controlling the intelligent robot to make an alongst behaviour, and marking alongst behaviour points on the raster map;
**characterized in that** each raster in the raster map is expressed with a digital sequence, the digital sequence comprising: at least one digital segment configured to express a virtual region where this raster is located, at least one digital segment configured to express whether the intelligent robot has ever reached this raster, at least one digital segment configured to express whether at least one obstacle is existed on this raster, at least one digital segment configured to express whether the intelligent robot has a collision on this raster, and at least one digital segment configured to express the intelligent robot has passed through this raster when making the alongst behaviour.

2. The path planning method as claimed in claim 1, wherein the bow-shaped behaviour comprises the following steps:
step one, going straight until finding an obstacle, or going straight until reaching a boundary of any virtual region;
step two, after finding the obstacle or reaching the boundary of any virtual region, turning 90°;
step three, going straight for a preset distance L or going straight until finding the obstacle;
step four, turning 90° and returning to the step one.

3. The path planning method as claimed in claim 2, wherein the preset distance L in the step three of the bow-shaped behaviour is half of a width of the intelligent robot.

4. The path planning method as claimed in claim 1, wherein the raster map is saved in the main control component (4) and different colours for expressing rasters, pass points, obstacle points, collision points and alongst behaviour points which are not marked by the intelligent robot are respectively used in the raster map.

5. The path planning method as claimed in claim 2, wherein a boundary of a first virtual region of the plurality of rectangular virtual regions is determined by a process of vertical boundary determination and a process of horizontal boundary determination,
in the process of the vertical boundary determination, when the intelligent robot starts, determining a forward moving direction as one boundary, and after turning right at the first time, determining a parallel line in n meter at right as another boundary, so that at least one vertical boundary is completed when the intelligent robot starts to move;
in the process of horizontal boundary determination, when moving along a vertical direction, constantly calculating the biggest coordinate point and the smallest coordinate point of the raster map where the intelligent robot passed through, and when a difference between the biggest coordinate point and the smallest coordinate point reaches m meter, determining a line which passes through the biggest coordinate point and is perpendicular to the vertical boundary as one horizontal boundary, and determining a line which passes through the smallest coordinate point and is perpendicular to the vertical boundary as another horizontal boundary.

6. The path planning method as claimed in claim 5, wherein a method for analyzing and determining a new virtual region in the plurality of rectangular virtual regions comprises:
when the intelligent robot finishes traversing a first virtual region, analyzing coordinate points on four virtual boundaries of the first virtual region;
when the intelligent robot passes through at least two continuous coordinate points is existed on a certain virtual boundary without any collision or obstacles nearby, determining that the new virtual region exists beside the certain virtual boundary, saving the new virtual region into a new virtual region array of the plurality of rectangular virtual regions, and then selecting a virtual region which is closest to the intelligent robot from the new virtual region array for controlling the intelligent robot to enter into the selected virtual region;
determining boundaries of the selected virtual region according to a method for determining boundaries of the first virtual region, and after traversing the selected virtual region, deleting new region information corresponding to the selected virtual region from the new virtual region array; and
when there is no new virtual region in the new virtual region array, ending the bow-shaped behaviour, and determining that the entire operating space has been fully traversed.

7. The path planning method as claimed in claim 6, wherein when the intelligent robot traverses a virtual region with the bow-shaped behaviour, conditions to exit the bow-shaped behaviour comprise:
condition one: in the step three of going straight in the bow-shaped behaviour, when the obstacles are found for two consecutive times, then shortening a distance of going straight in the step one; and in the step one of going straight in the bow-shaped behaviour, when a moving length is shorter than half of the width of the intelligent robot for two consecutive times, exiting the bow-shaped behaviour;
condition two: in a process of the bow-shaped behaviour, constantly analyzing whether obstacles always existed in a direction of going straight in the step one of the bow-shaped behaviour; when determining that the obstacles always existed in the direction of going straight in the step one of the bow-shaped behaviour, exiting the bow-shaped behaviour.

8. The path planning method as claimed in claim 7, wherein the method further comprises:
when the bow-shaped behaviour ends, analyzing the raster map to find an omitted local region which is closest to the intelligent robot;
navigating the intelligent robot to the omitted local region, and restart the bow-shaped behaviour until finish traversing the omitted local region.

9. The path planning method as claimed in claim 8, wherein a method for determining whether there is any omitted local region comprises:
determining whether two consecutive boundary points exist along a direction of going straight in the step three of the bow-shaped behaviour or along a reverse direction of 180°;
when determining that two consecutive boundary points exist along the direction of going straight in the step three of the bow-shaped behaviour or along the reverse direction of 180°, determining that the omitted local region exists;
wherein each boundary point of the two consecutive boundary points is a point on the boundary of the raster map, and the intelligent robot passes through the two consecutive boundary points without the collision or the obstacles nearby.

10. The path planning method as claimed in claim 9, wherein the method further comprises:
finding an omitted local region which is closest to the intelligent robot from all the omitted local regions, and keep starting the bow-shaped behaviour.

11. The path planning method as claimed in claim 9, wherein a method for determining each boundary point of the two consecutive boundary points comprises:
step a, determining whether the intelligent robot passes through a current point without the collision or detecting the obstacles nearby: when determining that the intelligent robot passes through the current boundary point without the collision or detecting the obstacles nearby, entering into step b, otherwise, ending the method;
step b, determining whether the intelligent robot has not passed through a previous point without the collision or detecting the obstacles nearby; when determining whether the intelligent robot has not passed through the previous point without the collision or detecting the obstacles nearby, entering into step c; otherwise, ending the method;
step c, determining that the current point as each boundary point;
wherein the previous point refers to a coordinate point next to the current point along the direction of going straight in the step three of the bow-shaped behaviour or along the reverse direction of 180°.

12. The path planning method as claimed in claim 11, wherein in a process of traversing the entire operating space, a method for determining the omitted local region comprises:
step A, traversing the entire raster map array to determine whether the current point is the last point, when determining that the current point is the last point, ending the method; otherwise, enter into step B;
step B, determining whether the current point is a virtual boundary point, when determining that the current point is the virtual boundary point, entering into step A, otherwise, entering into step C;
step C, determining whether the current point is a boundary point, when determining that the current point is the boundary point, entering into step D, otherwise, entering into step A;
step D, determining whether there is at least one point adjacent to this boundary point, when determining that there is the at least one point adjacent to this boundary point, entering into step E, otherwise, entering into step A;
step E saving this boundary point into a omitted local region array.

13. The path planning method as claimed in claim 1, wherein the alongst behaviour comprises:
calculating a total length of boundaries of traversed virtual regions according to the raster map;
dividing the total length by a moving speed when the intelligent robot making the alongst behaviour to obtain a time period for making the alongst behaviour;
starting and keeping the alongst behaviour until the time period is over, and ending the alongst behaviour.

## Patentansprüche

1. Pfadplanungsverfahren eines intelligenten Roboters, wobei der intelligente Roboter eine Hauptsteuerkomponente (4), mindestens ein bewegliches Rad (2, 3), einen Kollisionserkennungssensor, einen Hinderniserkennungssensor, einen Entfernungsinformationssensor und einen Winkelinformationssensor umfasst und das Pfadplanungsverfahren umfasst:
Aufteilen eines Arbeitsraums in mehrere rechteckige virtuelle Regionen, wobei ein Bereich jeder rechteckigen virtuellen Region der mehreren rechteckigen virtuellen Regionen n*m Quadratmeter ist;
Steuern des intelligenten Roboters zum Durchqueren jeder rechteckigen virtuellen Region mit einem bogenförmigen Verhalten;
beim Durchqueren mit dem bogenförmigen Verhalten Erstellen einer Rasterkarte mit Entfernungsinformationen, die von dem Entfernungsinformationssensor bezogen werden, Winkelinformationen, die von dem Winkelinformationssensor bezogen werden, Kollisionsinformationen, die von dem Kollisionserkennungssensor bezogen werden, und Hindernisinformationen, die von dem Hinderniserkennungssensor bezogen werden, durch den intelligenten Roboter und Markieren von Passierpunkten, Hindernispunkten und Kollisionspunkten durch den intelligenten Roboter;
Analysieren der Rasterkarte in Echtzeit, um zu bestimmen, ob der gesamte Arbeitsraum vollständig durchquert wurde, und wenn der gesamte Arbeitsraum vollständig durchquert wurde, Vorgehen zu dem nächsten Schritt, und wenn der gesamte Arbeitsraum nicht vollständig durchquert wurde, Zurückgehen zu dem Schritt des Steuerns des intelligenten Roboters zum Durchqueren jeder rechteckigen virtuellen Region mit einem bogenförmigen Verhalten;
Steuern des intelligenten Roboters zum Vornehmen eines Längsverhaltens und Markieren von Längsverhaltenspunkten auf der Rasterkarte;
**dadurch gekennzeichnet, dass** jedes Raster in der Rasterkarte mit einer digitalen Sequenz ausgedrückt ist, wobei die digitale Sequenz umfasst: mindestens ein digitales Segment, das dazu konfiguriert ist, eine virtuelle Region, in der sich dieses Raster befindet, auszudrücken, mindestens ein digitales Segment, das dazu konfiguriert ist, auszudrücken, ob der intelligente Roboter jemals dieses Raster erreicht hat, mindestens ein digitales Segment, das dazu konfiguriert ist, auszudrücken, ob mindestens ein Hindernis auf diesem Raster existiert, mindestens ein digitales Segment, das dazu konfiguriert ist, auszudrücken, ob der intelligente Roboter eine Kollision auf diesem Raster hat, und mindestens ein digitales Segment, das dazu konfiguriert ist, auszudrücken, dass der intelligente Roboter durch dieses Raster beim Vornehmen des Längsverhaltens gefahren ist.

2. Pfadplanungsverfahren nach Anspruch 1, wobei das bogenförmige Verhalten die folgenden Schritte umfasst:
Schritt eins, Geradefahren, bis ein Hindernis gefunden wird, oder Geradefahren, bis eine Abgrenzung einer beliebigen virtuellen Region erreicht wird;
Schritt zwei, nach Finden des Hindernisses oder Erreichen der Abgrenzung einer beliebigen virtuellen Region Wenden um 90°;
Schritt drei, Geradefahren für eine voreingestellte Entfernung L oder Geradefahren, bis das Hindernis gefunden wird;
Schritt vier, Wenden um 90° und Zurückgehen zu Schritt eins.

3. Pfadplanungsverfahren nach Anspruch 2, wobei die voreingestellte Entfernung L im Schritt drei des bogenförmigen Verhaltens die Hälfte einer Breite des intelligenten Roboters ist.

4. Pfadplanungsverfahren nach Anspruch 1, wobei die Rasterkarte in der Hauptsteuerkomponente (4) gespeichert wird und unterschiedliche Farben zum Ausdrücken von Rastern, Passierpunkten, Hindernispunkten, Kollisionspunkten und Längsverhaltenspunkten, die von dem intelligenten Roboter nicht markiert werden, jeweils in der Rasterkarte verwendet werden.

5. Pfadplanungsverfahren nach Anspruch 2, wobei eine Abgrenzung einer ersten virtuellen Region der mehreren rechteckigen virtuellen Regionen durch einen Vorgang zur Bestimmung von vertikalen Abgrenzungen und einen Vorgang zur Bestimmung von horizontalen Abgrenzungen bestimmt wird,
in dem Vorgang zur Bestimmung von vertikalen Abgrenzungen, wenn der intelligente Roboter startet, Bestimmen einer Vorwärtsbewegungsrichtung als eine Abgrenzung und nach erstmaligem Rechtswenden Bestimmen einer parallelen Linie in n Meter zur Rechten als eine andere Abgrenzung, so dass mindestens eine vertikale Abgrenzung abgeschlossen ist, wenn der intelligente Roboter beginnt, sich zu bewegen;
in dem Vorgang zur Bestimmung von horizontalen Abgrenzungen beim Bewegen entlang einer vertikalen Richtung konstantes Berechnen des größten Koordinatenpunkts und des kleinsten Koordinatenpunkts der Rasterkarte, an denen der intelligente Roboter hindurch gefahren ist, und wenn eine Differenz zwischen dem größten Koordinatenpunkt und dem kleinsten Koordinatenpunkt m Meter erreicht, Bestimmen einer Linie, die durch den größten Koordinatenpunkt verläuft und senkrecht zu der vertikalen Abgrenzung ist, als eine horizontale Abgrenzung und Bestimmen einer Linie, die durch den kleinsten Koordinatenpunkt verläuft und senkrecht zu der vertikalen Abgrenzung ist, als eine andere horizontale Abgrenzung.

6. Pfadplanungsverfahren nach Anspruch 5, wobei ein Verfahren zur Analyse und Bestimmung einer neuen virtuellen Region in den mehreren rechteckigen virtuellen Regionen umfasst:
wenn der intelligente Roboter ein Durchqueren der ersten virtuellen Region abschließt, Analysieren von Koordinatenpunkten an vier virtuellen Abgrenzungen der ersten virtuellen Region;
wenn der intelligente Roboter durch mindestens zwei kontinuierliche Koordinatenpunkte, die an einer bestimmten virtuellen Abgrenzung existieren, ohne jegliche Kollision oder Hindernisse in der Nähe fährt, Bestimmen, dass die neue virtuelle Region neben der bestimmten virtuellen Abgrenzung existiert, Speichern der neuen virtuellen Region in ein Array von neuen virtuellen Regionen der mehreren rechteckigen virtuellen Regionen und dann Auswählen einer virtuellen Region, die dem intelligenten Roboter am nächsten ist, aus dem Array von neuen virtuellen Regionen zum Steuern des intelligenten Roboters zum Eindringen in die ausgewählte virtuelle Region;
Bestimmen von Abgrenzungen der ausgewählten virtuellen Region gemäß einem Verfahren zur Bestimmung von Abgrenzungen der ersten virtuellen Region und nach Durchqueren der ausgewählten virtuellen Region Löschen von Informationen von neuen Regionen entsprechend der ausgewählten virtuellen Region aus dem Array von neuen virtuellen Regionen; und
wenn es keine neue virtuelle Region in dem Array von neuen virtuellen Regionen gibt, Beenden des bogenförmigen Verhaltens und Bestimmen, dass der gesamte Arbeitsraum vollständig durchquert wurde.

7. Pfadplanungsverfahren nach Anspruch 6, wobei, wenn der intelligente Roboter eine virtuelle Region mit dem bogenförmigen Verhalten durchquert, Bedingungen zum Verlassen des bogenförmigen Verhaltens umfassen:
Bedingung eins: im Schritt drei des Geradefahrens in dem bogenförmigen Verhalten, wenn die Hindernisse für zwei aufeinanderfolgende Male gefunden werden, dann Verkürzen einer Entfernung des Geradefahrens im Schritt eins; und im Schritt eins des Geradefahrens in dem bogenförmigen Verhalten, wenn eine Bewegungslänge für zwei aufeinanderfolgende Male kürzer als die Hälfte der Breite des intelligenten Roboters ist, Verlassen des bogenförmigen Verhaltens;
Bedingung zwei: in einem Vorgang des bogenförmigen Verhaltens konstantes Analysieren, ob Hindernisse in einer Richtung des Geradefahrens im Schritt eins des bogenförmigen Verhaltens immer existiert haben; wenn bestimmt wird, dass die Hindernisse in der Richtung des Geradefahrens im Schritt eins des bogenförmigen Verhaltens immer existiert haben, Verlassen des bogenförmigen Verhaltens.

8. Pfadplanungsverfahren nach Anspruch 7, wobei das Verfahren weiterhin umfasst:
wenn das bogenförmige Verhalten endet, Analysieren der Rasterkarte, um eine ausgelassene lokale Region zu finden, die dem intelligenten Roboter am nächsten ist;
Navigieren des intelligenten Roboters zu der ausgelassenen lokalen Region und Neustarten des bogenförmigen Verhaltens, bis ein Durchqueren der ausgelassenen lokalen Region abgeschlossen ist.

9. Pfadplanungsverfahren nach Anspruch 8, wobei ein Verfahren zur Bestimmung, ob es eine etwaige ausgelassene lokale Region gibt, umfasst:
Bestimmen, ob zwei aufeinanderfolgende Abgrenzungspunkte entlang einer Richtung des Geradefahrens im Schritt drei des bogenförmigen Verhaltens oder entlang einer Rückwärtsrichtung von 180° existieren;
wenn bestimmt wird, dass zwei aufeinanderfolgende Abgrenzungspunkte entlang einer Richtung des Geradefahrens im Schritt drei des bogenförmigen Verhaltens oder entlang einer Rückwärtsrichtung von 180° existieren, Bestimmen, dass die ausgelassene lokale Region existiert;
wobei jeder Abgrenzungspunkt der zwei aufeinanderfolgenden Abgrenzungspunkte ein Punkt an der Abgrenzung der Rasterkarte ist und der intelligente Roboter durch die zwei aufeinanderfolgenden Abgrenzungspunkte ohne die Kollision oder die Hindernisse in der Nähe fährt.

10. Pfadplanungsverfahren nach Anspruch 9, wobei das Verfahren weiterhin umfasst:
Finden einer ausgelassenen lokalen Region, die dem intelligenten Roboter am nächsten ist, aus all den ausgelassenen lokalen Regionen und fortgesetztes Starten des bogenförmigen Verhaltens.

11. Pfadplanungsverfahren nach Anspruch 9, wobei ein Verfahren zur Bestimmung jedes Abgrenzungspunkts der zwei aufeinanderfolgenden Abgrenzungspunkte umfasst:
Schritt a, Bestimmen, ob der intelligente Roboter durch einen aktuellen Punkt ohne die Kollision oder ein Erkennen der Hindernisse in der Nähe fährt: wenn bestimmt wird, dass der intelligente Roboter durch den aktuellen Abgrenzungspunkt ohne die Kollision oder ein Erkennen der Hindernisse in der Nähe fährt, Vorgehen zu Schritt b, andernfalls Beenden des Verfahrens;
Schritt b, Bestimmen, ob der intelligente Roboter nicht durch einen vorherigen Punkt ohne die Kollision oder ein Erkennen der Hindernisse in der Nähe gefahren ist; wenn bestimmt wird, dass der intelligente Roboter nicht durch den vorherigen Punkt ohne die Kollision oder ein Erkennen der Hindernisse in der Nähe gefahren ist, Vorgehen zu Schritt c; andernfalls Beenden des Verfahrens;
Schritt c, Bestimmen des aktuellen Punkts als jeden Abgrenzungspunkt;
wobei der vorherige Punkt sich auf einen Koordinatenpunkt neben dem aktuellen Punkt entlang der Richtung des Geradefahrens im Schritt drei des bogenförmigen Verhaltens oder entlang der Rückwärtsrichtung von 180° bezieht.

12. Pfadplanungsverfahren nach Anspruch 11, wobei in einem Vorgang eines Durchquerens des gesamten Arbeitsraums ein Verfahren zur Bestimmung der ausgelassenen lokalen Region umfasst:
Schritt A, Durchqueren des gesamten Rasterkartenarrays, um zu bestimmen, ob der aktuelle Punkt der letzte Punkt ist, wenn bestimmt wird, dass der aktuelle Punkt der letzte Punkt ist, Beenden des Verfahrens; andernfalls Vorgehen zu Schritt B;
Schritt B, Bestimmen, ob der aktuelle Punkt ein virtueller Abgrenzungspunkt ist, wenn bestimmt wird, dass der aktuelle Punkt ein virtueller Abgrenzungspunkt ist, Vorgehen zu Schritt A, andernfalls Vorgehen zu Schritt C;
Schritt C, Bestimmen, ob der aktuelle Punkt ein Abgrenzungspunkt ist, wenn bestimmt wird, dass der aktuelle Punkt ein Abgrenzungspunkt ist, Vorgehen zu Schritt D, andernfalls Vorgehen zu Schritt A;
Schritt D, Bestimmen, ob es mindestens einen Punkt benachbart zu diesem Abgrenzungspunkt gibt, wenn bestimmt wird, dass es den mindestens einen Punkt benachbart zu diesem Abgrenzungspunkt gibt, Vorgehen zu Schritt E, andernfalls Vorgehen zu Schritt A;
Schritt E, Speichern dieses Abgrenzungspunkts in einem Array von ausgelassenen lokalen Regionen.

13. Pfadplanungsverfahren nach Anspruch 1, wobei das Längsverhalten umfasst:
Berechnen einer Gesamtlänge von Abgrenzungen von durchquerten virtuellen Regionen gemäß der Rasterkarte;
Dividieren der Gesamtlänge durch eine Bewegungsgeschwindigkeit, wenn der intelligente Roboter das Längsverhalten vornimmt, um einen Zeitraum zum Vornehmen des Längsverhaltens zu erhalten;
Starten und Beibehalten des Längsverhaltens, bis der Zeitraum abgelaufen ist, und Enden des Längsverhaltens.

## Revendications

1. Procédé de planification de chemin d'un robot intelligent, dans lequel le contenu de robot intelligent comprend un composant de commande principal (4), au moins une roue mobile (2,3), un capteur de détection de collision, un capteur de détection d'obstacle, un capteur d'informations de distance et un capteur d'informations d'angle, et le procédé de planification de chemin comprenant :
la division d'un espace de fonctionnement en une pluralité de régions virtuelles rectangulaires, dans lequel une superficie de chaque région virtuelle rectangulaire de la pluralité de régions virtuelles rectangulaires est n * m mètres carrés ;
la commande du robot intelligent pour traverser chaque région virtuelle rectangulaire avec un comportement en forme d'arc ;
lors de la traversée avec le comportement en forme d'arc, la construction, par le robot intelligent, d'une carte matricielle avec des informations de distance acquises par le capteur d'informations de distance, des informations d'angle acquises par le capteur d'informations d'angle, des informations de collision acquises par le capteur de détection de collision et des informations d'obstacle acquises par le capteur de détection d'obstacle, et le marquage, par le robot intelligent, de points de passage, de points d'obstacle et de points de collision ;
l'analyse de la carte matricielle en temps réel pour déterminer si l'espace de fonctionnement entier a été complètement traversé, et lorsque l'espace de fonctionnement entier a été complètement traversé, l'entrée à l'étape suivante et lorsque l'espace de fonctionnement entier n'a pas été complètement traversé, le retour à l'étape consistant à commander le robot intelligent pour traverser chaque région virtuelle rectangulaire avec le comportement en forme d'arc ;
la commande du robot intelligent pour avoir un comportement le long, et le marquage de points de comportement le long sur la carte matricielle ;
**caractérisé en ce que** chaque trame dans la carte matricielle est exprimée avec une séquence numérique, la séquence numérique comprenant : au moins un segment numérique configuré pour exprimer une région virtuelle où cette trame est située, au moins un segment numérique configuré pour exprimer si le robot intelligent a déjà atteint cette trame, au moins un segment numérique configuré pour exprimer si au moins un obstacle existe sur cette trame, au moins un segment numérique configuré pour exprimer si le robot intelligent a une collision sur cette trame, et au moins un segment numérique configuré pour exprimer que le robot intelligent est passé par cette trame lorsqu'il avait le comportement le long.

2. Procédé de planification de chemin selon la revendication 1, dans lequel le comportement en forme d'arc comprend les étapes suivantes :
étape une, le fait d'aller tout droit jusqu'à trouver un obstacle, ou le fait d'aller tout droit jusqu'à atteindre une limite d'une quelconque région virtuelle ;
étape deux, après avoir trouvé l'obstacle ou atteint la limite d'une quelconque région virtuelle, le fait de tourner de 90° ;
étape trois, le fait d'aller tout droit sur une distance L prédéfinie ou le fait d'aller tout droit jusqu'à trouver l'obstacle ;
étape quatre, le fait de tourner de 90° et le retour à l'étape une.

3. Procédé de planification de chemin selon la revendication 2, dans lequel la distance L prédéfinie à l'étape trois du comportement en forme d'arc est la moitié d'une largeur du robot intelligent.

4. Procédé de planification de chemin selon la revendication 1, dans lequel la carte matricielle est sauvegardée dans le composant de commande principal (4) et différentes couleurs pour exprimer des trames, des points de passage, des points d'obstacle, des points de collision et des points de comportement le long qui ne sont pas marqués par le robot intelligent sont respectivement utilisés dans la carte matricielle.

5. Procédé de planification de chemin selon la revendication 2, dans lequel une limite d'une première région virtuelle de la pluralité de régions virtuelles rectangulaires est déterminée par un procédé de détermination de limite verticale et un procédé de détermination de limite horizontale,
dans le procédé de la détermination de limite verticale, lorsque le robot intelligent démarre, la détermination d'une direction de déplacement vers l'avant en tant que limite, et après avoir tourné à droite la première fois, la détermination d'une ligne parallèle dans n mètres à droite en tant qu'autre limite, de sorte qu'au moins une limite verticale soit terminée lorsque le robot intelligent commence à se déplacer ;
dans le procédé de détermination de limite horizontale, lors d'un déplacement le long d'une direction verticale, le calcul de manière constante du point de coordonnées le plus grand et du point de coordonnées le plus petit de la carte matricielle par lesquels le robot intelligent est passé, et lorsqu'une différence entre le point de coordonnées le plus grand et le point de coordonnées le plus petit atteint m mètres, la détermination d'une ligne qui passe par le point de coordonnées le plus grand et est perpendiculaire à la limite verticale en tant que limite horizontale, et la détermination d'une ligne qui passe par le point de coordonnées le plus petit et est perpendiculaire à la limite verticale en tant qu'autre limite horizontale.

6. Procédé de planification de chemin selon la revendication 5, dans lequel un procédé pour analyser et déterminer une nouvelle région virtuelle dans la pluralité de régions virtuelles rectangulaires comprend :
lorsque le robot intelligent finit de traverser une première région virtuelle, l'analyse de points de coordonnées sur quatre limites virtuelles de la première région virtuelle ;
lorsque le robot intelligent passe par au moins deux points de coordonnées continus existe sur une certaine limite virtuelle sans aucune collision ni obstacle à proximité, le fait de déterminer que la nouvelle région virtuelle existe à côté de la certaine limite virtuelle, la sauvegarde de la nouvelle région virtuelle dans un nouveau réseau de régions virtuelles de la pluralité de régions virtuelles rectangulaires, et ensuite la sélection d'une région virtuelle qui est la plus proche du robot intelligent à partir du nouveau réseau de régions virtuelles pour commander le robot intelligent pour entrer dans la région virtuelle sélectionnée ;
la détermination de limites de la région virtuelle sélectionnée conformément à un procédé pour déterminer des limites de la première région virtuelle, et après la traversée de la région virtuelle sélectionnée, l'effacement de nouvelles informations de région correspondant à la région virtuelle sélectionnée à partir du nouveau réseau de régions virtuelles ; et
lorsqu'il n'y a aucune nouvelle région virtuelle dans le nouveau réseau de régions virtuelles, le fait de mettre fin au comportement en forme d'arc, et le fait de déterminer que l'espace de fonctionnement entier a été complètement traversé.

7. Procédé de planification de chemin selon la revendication 6, dans lequel lorsque le robot intelligent traverse une région virtuelle avec le comportement en forme d'arc, des conditions pour sortir du comportement en forme d'arc comprennent :
condition une : à l'étape trois consistant à aller tout droit dans le comportement en forme d'arc, lorsque les obstacles sont trouvés deux fois consécutives, alors le raccourcissement d'une distance du fait d'aller tout droit à l'étape une ; et à l'étape une consistant à aller tout droit dans le comportement en forme d'arc, lorsqu'une longueur de déplacement est plus courte que la moitié de la largeur du robot intelligent deux fois consécutives, la sortie du comportement en forme d'arc ;
condition deux : dans un procédé du comportement en forme d'arc, le fait d'analyser de manière constante si des obstacles ont toujours existé dans une direction du fait d'aller tout droit à l'étape une du comportement en forme d'arc ; lorsqu'il est déterminé que les obstacles ont toujours existé dans la direction du fait d'aller tout droit à l'étape une du comportement en forme d'arc, la sortie du comportement en forme d'arc.

8. Procédé de planification de chemin selon la revendication 7, dans lequel le procédé comprend en outre :
lorsqu'il est mis fin au comportement en forme d'arc, l'analyse de la carte matricielle pour trouver une région locale omise qui est la plus proche du robot intelligent ;
la navigation du robot intelligent vers la région locale omise, et le fait de recommencer le comportement en forme d'arc jusqu'à la fin de la traversée de la région locale omise.

9. Procédé de planification de chemin selon la revendication 8, dans lequel un procédé pour déterminer s'il y a une quelconque région locale omise comprend :
le fait de déterminer si deux points de limite consécutifs existent le long d'une direction du fait d'aller tout droit à l'étape trois du comportement en forme d'arc ou le long d'une direction inverse de 180° ;
lorsqu'il est déterminé que deux points de limite consécutifs existent le long de la direction du fait d'aller tout droit à l'étape trois du comportement en forme d'arc ou le long de la direction inverse de 180°, le fait de déterminer que la région locale omise existe ;
dans lequel chaque point de limite des deux points de limite consécutifs est un point sur la limite de la carte matricielle, et le robot intelligent passe par les deux points de limite consécutifs sans la collision ni les obstacles à proximité.

10. Procédé de planification de chemin selon la revendication 9, dans lequel le procédé comprend en outre :
le fait de trouver une région locale omise qui est la plus proche du robot intelligent à partir de toutes les régions locales omises, et continuer à commencer le comportement en forme d'arc.

11. Procédé de planification de chemin selon la revendication 9, dans lequel un procédé pour déterminer chaque point de limite des deux points de limite consécutifs comprend :
étape a, le fait de déterminer si le robot intelligent passe par un point courant sans la collision ou la détection des obstacles à proximité : lorsqu'il est déterminé que le robot intelligent passe par le point de limite courant sans la collision ou la détection des obstacles à proximité, l'entrée à l'étape b, sinon, le fait de mettre fin au procédé ;
étape b, le fait de déterminer si le robot intelligent n'est pas passé par un point précédent sans la collision ou la détection des obstacles à proximité ; lorsqu'il est déterminé si le robot intelligent n'est pas passé par le point précédent sans la collision ou la détection des obstacles à proximité, l'entrée à l'étape c ; sinon, le fait de mettre fin au procédé ;
étape c, le fait de déterminer que le point courant en tant que chaque point de limite ;
dans lequel le point précédent se rapporte à un point de coordonnées près du point courant le long de la direction du fait d'aller tout droit à l'étape trois du comportement en forme d'arc ou le long de la direction inverse de 180°.

12. Procédé de planification de chemin selon la revendication 11, dans lequel dans un procédé de traversée de l'espace de fonctionnement entier, un procédé pour déterminer la région locale omise comprend :
étape A, la traversée du réseau de carte matricielle entier pour déterminer si le point courant est le dernier point, lorsqu'il est déterminé que le point courant est le dernier point, le fait de mettre fin au procédé ; sinon, l'entrée à l'étape B ;
étape B, le fait de déterminer si le point courant est un point de limite virtuelle, lorsqu'il est déterminé que le point courant est le point de limite virtuelle, l'entrée à l'étape A, sinon, l'entrée à l'étape C ;
étape C, le fait de déterminer si le point courant est un point de limite, lorsqu'il est déterminé que le point courant est le point de limite, l'entrée à l'étape D, sinon, l'entrée à l'étape A ;
étape D, le fait de déterminer s'il y a au moins un point adjacent à ce point de limite, lorsqu'il est déterminé qu'il y a l'au moins un point adjacent à ce point de limite, l'entrée à l'étape E, sinon, l'entrée à l'étape A ;
étape E, la sauvegarde de ce point de limite dans un réseau de régions locales omises.

13. Procédé de planification de chemin selon la revendication 1, dans lequel le comportement le long comprend :
le calcul d'une longueur totale de limites de régions virtuelles traversées conformément à la carte matricielle ;
la division de la longueur totale par une vitesse de déplacement lorsque le robot intelligent a le comportement le long pour obtenir une période de temps pour avoir le comportement le long ;
le fait de commencer et de continuer le comportement le long jusqu'à ce que la période de temps soit écoulée, et le fait de mettre fin au comportement le long.
